# EUROPÄISCHE PATENTSCHRIFT

(11) **EP 0 845 427 B1**
(45) Veröffentlichungstag und Bekanntmachung des Hinweises auf die Patenterteilung: **14.04.2004**
(21) Anmeldenummer: 97120328.6
(22) Anmeldetag: 20.11.1997
(51) Int. Cl.: B65G 49/06, B65G 47/74, C03B 35/24

(54) **Vorrichtung zur Handhabung von dünnen Glasscheiben**
Apparatus for transporting thin glass sheets
Appareil de transport de feuilles de verre minces

(30) Priorität: 29.11.1996 DE 19649488
(43) Veröffentlichungstag der Anmeldung: 03.06.1998
(73) Patentinhaber: Schott Glas, 55122 Mainz (DE)
(72) Erfinder: Ostendarp, Heinrich, Dr., 55128 Mainz (DE)
(74) Vertreter: Fuchs Mehler Weiss & Fritzsche

(56) Entgegenhaltungen:
- FR-A- 1 547 624
- FR-A- 2 024 397
- US-A- 3 355 275

## Beschreibung

Die Erfindung betrifft ein Verfahren zur Handhabung dünner Glasscheiben oder ähnlicher flächiger Werkstücke und Produkte mittels pneumatischer Kräfte sowie eine Vorrichtung zur Durchführung des Verfahrens.

Dünnes Flachglas wird in großem Umfang zur Herstellung von Displays verwendet. Dabei werden Kratzer, Einschlüsse, Ablagerungen usw. größer etwa 10µm als Fehler angesehen, weil sie am fertigen Display lokale Bildstörungen verursachen, die nicht tolerierbar sind. Es müssen daher umfangreiche Kontrollmaßnahmen vorgesehen werden, um unbrauchbare Erzeugnisse zu erkennen und auszusortieren.

Da außerdem hohe Anforderungen an die Ebenheit und Parallelität des für Displays eingesetzten Flachglases bestehen, ist im Herstellungsprozess üblicherweise ein Polieren der Oberflächen vorgesehen. Damit lassen sich zwar viele vorhandene Fehler beseitigen, die Herstellung wird aber auch erheblich verteuert. Man ist daher sehr darum bemüht, den Poliervorgang einzusparen.

Bei neueren Herstellungsverfahren für Flachglas können die Anforderungen an die Ebenheit und Parallelität der Glasoberflächen in zunehmendem Maße am gezogenen oder gefloateten Rohglas eingehalten werden, so dass man wegen der Kostenvorteile auf das Polieren verzichten kann. Damit entfällt aber auch die Möglichkeit zur Fehlerbeseitigung. Andererseits ist ein Polieren von Flachglas mit einer Dicke im Bereich von 30 bis 300µm derzeit noch nicht oder nur mit unvertretbar hohem Aufwand bei Glasscheiben für kleine Disptayformate möglich. Projektiert werden heute u.a. dagegen Formate bis zu 650 x 1000 mm bei einer Scheibendicke im Bereich von 50µm. Außerdem werden die Spezifikationen hinsichtlich Fehtergröße und Anzahl der Fehler pro Flächeneinheit bei den neueren Display-Ausführungen, wie Field Emission Display (FED), Plasma Display Panel (PDP), Plasma Addressed Liquid Cristal (PALC), THin Film Transistor (TFT) oder Super Twisted Nemetic (STN) immer strenger, so dass die Glashersteller zu immer größeren Anstrengungen gezwungen werden, um ein technisch und wirtschaftlich akzeptables Produkt anbieten zu können.

Ein unverzichtbarer Herstellungsschritt ist das Formatieren des aus wirtschaftlichen Gründen in großen Tafeln oder auch als breites, aufgewickeltes Band erzeugten Rohglases, d.h. das Schneiden auf die gewünschte Displaygröße einschließlich Kanten- und Eckenbearbeitung, woran sich gegebenenfalls noch eine Endreinigung anschließen muss.

Aus der DE 17 56 070 B2 ist zwar schon eine Vorrichtung zum Transportieren von Glas in Form einer Scheibe oder eines Bandes bekannt geworden, bei der das Glas auf einem Gaskissen beanstandet zu einer Unterkonstruktion liegt und berührungsfrei horizontal relativ zur Unterkonstruktion bewegt werden kann. Die Unterkonstruktion ist mit nebeneinander liegenden Schlitzen für den Gasdurchtritt ausgestattet, die jedoch wechselnd als Austritts- und Absaugschlitze ausgebildet und mit entsprechenden Über- und Unterdruckquellen verbunden sind. Dadurch wird an der Glasoberfläche ein Wechselfeld einander entgegengerichteter Kräfte erzeugt, denen dünne Glasscheiben nicht standhalten würden. Außerdem wird bestenfalls nur eine der beiden Glasoberflächen gegen Verschmutzung geschützt.

Ferner ist aus der EP 0 336 332 B1 eine Vorrichtung zur Greifen, Aufund Abstapeln sowie Fördern von Glastafeln bekannt, bei der auch aus anderem Zusammenhang bekannte, mit Unterdruck arbeitende Sauggreifer verwendet werden. Derartige Sauggreifer können unterhalb einer Mindestglasdicke nicht verwendet werden, weil sich die dünne Glasscheibe im Bereich der Sauggreifer durchbiegen, im ungünstigsten Fall auch brechen würde. Außerdem ist die Halterung mittels Sauggreifern bei sehr dünnen Glasscheiben für eine Beareitung wie Schneiden, Schleifen und/oder Polieren nicht geeignet, weil die Einspannung nicht gleichmäßig ist, bzw. im Bearbeitungsbereich nicht gleichmäßig aufrechterhalten werden kann. Im übrigen verhindern die Sauggreifer auch nicht die Verschmutzung der Glasoberflächen beim Transport und bei der Bearbeitung.

Bei dem aus der US-A-3,355,275 bekannten, berührungsfreien Transport eines aus einer Glasschmelze abgezogenen Glasbandes wird eine Vorrichtung verwendet, bei der unterhalb und oberhalb des Transportraumes für das Glas eine Mehrzahl von Modulen für die Zuund Abfuhr von Kühlluft angeordnet ist, die unterhalb des Glasbandes außerdem ein tragendes Gaspolster bildet. Auch diese Vorrichtung ist für die Handhabung dünner Glasscheiben nicht geeignet, weil durch die in Transportrichtung abwechselnd angeordneten Öffnungen für die Zuund Abfuhr von Kühlluft ein schädliches Wechselfeld pneumatischer Kräfte erzeugt wird. Das gleiche gilt für die aus der FR-A-20 24 397 bekannte Vorrichtung.

Der Erfindung liegt die Aufgabe zugrunde, ein Verfahren und eine Vorrichtung zur Handhabung von dünnen Glasscheiben in Bearbeitungsanlagen, insbesondere in Schneidantagen vorzuschlagen, die es erlauben, sowohl die vorhandenen Rohgtasformate wie auch die Fertigformate so zu halten und zu transportieren, dass die Oberflächen nicht beschädigt werden, dass Ablagerungen von Schmutzpartikeln, Schneidsplittem oder dergleichen vermieden werden und dass Glasbruch möglichst ausgeschlossen ist. Dabei ist zu berücksichtigen, dass der Verzicht auf das Polieren aus technischen oder wirtschaftlichen Gründen das Streben zu immer größeren Displayformaten und die zunehmen strengeren Spezifikationen hinsichtlich Fehlergröße und Fehlerhäufigkeit eine äußerst schonende Handhabung des Glases erfordern.

Zur Lösung dieser Aufgabe wird ein Verfahren gemäß Anspruch 1 vorgeschlagen. Bei diesem Verfahren können in einer ersten Betriebsweise beide Platten der Vorrichtung mit Überdruck beaufschlagt werden, so dass die Glasscheibe zwischen den Platten berührungsfrei gehalten wird, oder aber es kann in einer zweiten Betriebsweise eine Platte mit Überdruck und die andere Platte mit Unterdruck beaufschlagt werden, so dass die Glasscheibe an eine Platte angedrückt und von ihr festgehalten wird. In der ersten Betriebsweise wird zu beiden Seiten der zwischen den Platten befindlichen Glasscheibe ein vorzugsweise gleich großer, randseitig austretender Gasstrom aufrechterhalten, der dafür sorgt, dass vorhandener Staub oder dergleichen nach außen abgeführt wird und dass von außen nichts eindringen kann. Gleichzeitig wird dafür gesorgt, dass die Glasscheibe weder die obere noch die untere Platte berührt und daher zwischen den Platten horizontal weiterbewegt werden kann, ohne dass die Gefahr besteht, dass die Glasoberfläche verkratzt wird. Vorzugsweise tritt der erzeugte Gasstrom aus paarweise gegenüberliegenden Öffnungen aus.

Dabei kann man den bekannten Setbststeuerungseffekt ausnutzen, der dadurch entsteht, dass eine vertikale Verlagerung der Glasscheibe, d.h. eine Annäherung an eine der Platten dazu führt, dass sich der Strömungsquerschnitt zwischen der Glasscheibe und der anderen Platte vergrößert, der pneumatische Druck bei unverändertem Gasdurchsatz auf dieser Seite abnimmt und Kräfte wirksam werden, die der vertikalen Verlagerung entgegenwirken. Die in einer Richtung senkrecht auf die Glasscheibe wirkende Erdbeschleunigung kann dabei durch marginal höheren Überdruck an der unteren Platte ohne weiteres regeltechnisch kompensiert werden, wenn eine genau mittige Lage der Glasscheibe zwischen den Platten erforderlich ist.

Die zweite Betriebsweise, bei der die Glasscheibe an einer der Platten festgehalten wird, dient entweder dazu, das Glas bei feststehender Platte zu bearbeiten oder aber zusammen mit der Platte in eine andere Position zu verlagern, beispielsweise aus der Bearbeitungs- in eine Ablage- oder Stapelposition zu transportieren.

Solange sich die Glasscheibe zwischen den beiden Platten befindet, wird auf der Überdruckseite, wie zuvor dafür gesorgt, daß diese Glasoberfläche nicht verschmutzen kann. Auf der Unterdruckseite liegt die Glasscheibe an der Platte an, so daß auch hier keine Verunreinigungen eindringen können, wenn die Oberfläche der Platte ausreichend eben und glatt ist oder wem randseitig eine geeignete Dichtung zwischen Platte und Glasscheibe angeordnet ist.

Mit der Anordnung paarweise gegenüberliegender Gasdurchtrittsöffnungen wird bei der ersten Betriebsweise dafür gesorgt, daß auf beiden Seiten der Glasfläche überall etwa die gleichen pneumatischen Kräfte wirken, wodurch ein Auswölben der dünnen Glasscheibe aus der Ebene vermieden wird. Außerdem kann so ein gewisser Glättungseffekt an der dünnen Glasscheibe erreicht werden.

In der zweiten Betriebsweise kann ein Glättungseffekt, der dem Glattstreichen von Papier mittels einer Handbewegung entspricht, auch erreicht werden, wenn die Gasdurchtrittsöffnungen bereichsweise vom Zentrum der Platten nach außen fortschreitend mit Über- oder Unterdruck beaufschlagt werden.

Vorteilhafte Ausgestaltungen und Abwandlungen des Erfindungsgedankens sind in den Ansprüchen 2 bis 20 beschrieben. Weitere Einzelheiten werden anhand der in den Figuren 1 bis 5 dargestellten Ausführungsbeispiele näher erläutert.
- Figur 1: zeigt einen Vertikalschnitt durch eine Vorrichtung gemäß der Erfindung in schematischer Darstellung.
- Figur 2: zeigt eine Seitenansicht der Vorrichtung nach Anspruch 1.
- Figur 3: zeigt ebenfalls eine Seitenansicht der Vorrichtung nach Anspruch 1.
- Figur 4: zeigt in vergrößerter Darstellung einen Schnitt durch den Randbereich einer Vorrichtung gemäß der Erfindung.
- Figur 5: zeigt schematisch eine Abfolge von Arbeitsschritten unter Verwendung einer Vorrichtung gemäß der Erfindung.

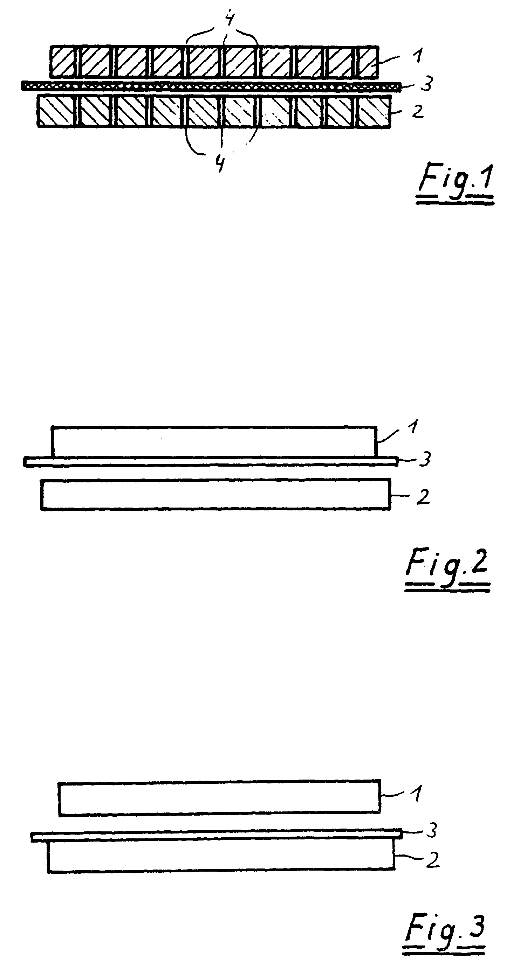

Die in Figur 1 stark vereinfacht dargestellte Vorrichtung umfaßt eine obere Platte 1 und eine untere Platte 2, die zwischen sich eine dünne Glasscheibe 3 berührungsfrei einschließen. Dies wird erreicht, wenn die paarweise einander gegenüberliegenden Gasdurchtrittsöffnungen 4 bei beiden Platten 1, 2 mit einer Gasfördereinrichtung zur Erzeugung von Überdruck verbunden sind. Die oberhalb und unterhalb der dünnen Glasscheibe 3 aus den Platten 1, 2 austretenden paarweise gleichen Gasströme halten die dünne Glasscheibe 3 quasi in der Schwebe, wobei eine vertikale Verlagerung der Glasscheibe, wie bereits erläutert, sofort entgegengesetzt gerichtete Kräfte erzeugt, so daß die berührungsfreie Lage der Glasscheibe 3 zwischen den Platten 1, 2 selbstregelnd eingehalten wird.

In dieser Lage kann die Glasscheibe 3 zwischen den Platten 1, 2 berührungsfrei gehalten und horizontal fixiert bzw. transportiert werden, wobei übliche, nicht dargestellte Transportmittel an der randseitig vorstehenden Glasscheibe 3 angreifen können.

Figur 2 zeigt schematisch die Lage der Glasscheibe 3, wenn die obere Platte 1 mit Unterdruck und die untere Platte 2 mit Überdruck beaufschlagt wird. Figur 3 zeigt die Lage der Glasscheibe 3 bei umgekehrter Druckbeaufschlagung. In der Lage gemäß Figur 2 kann die Glasscheibe 3 im Bereich außerhalb der oberen Platte bearbeitet werden, wobei die untere Platte als Widerlager zur Aufnahme von Bearbeitungskräften dient oder aber zusammen mit der oberen Platte vertikal und horizontal bewegt werden, um sie im Rahmen eines automatisierten Herstellungsprozesses aus der dargestellten Position in die nächstfolgende Position zu verlagern. In gleicher Weise kann die Glasscheibe auch in der Lage gemäß Figur 3 bearbeitet und zusammen mit der unteren Platte 2 transportiert werden. In allen Fällen sorgt der aus der jeweils beabstandeten Platte 1, 2 austretende Gasstrom dafür, daß die freie Glasoberfläche nicht durch Staub oder bei der Bearbeitung anfallende Partikel verunreinigt werden kann. Die anliegende Glasoberfläche ist insoweit ohnehin geschützt.

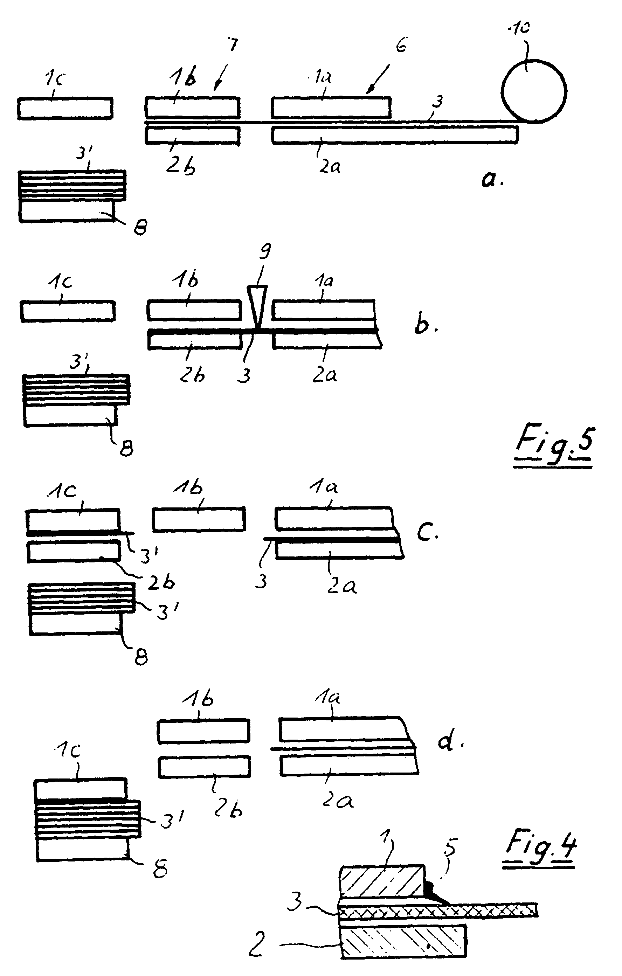

Beim Übergang von der Druckbeaufschlagung gemäß Figur 1 auf eine Druckbeaufschlagung gemäß Figur 2 oder 3, tritt kurzzeitig ein von außen nach innen gerichteter Gasstrom auf, der Verschmutzungen eintragen könnte. Um dies zu vermeiden, ist die Platte 1 gemäß Figur 4 randseitig mit einer geeigneten Dichtung 5 versehen, die sich mit einer weichen elastischen Zunge auf der dünnen Glasscheibe abstützt und so das Eindringen von Fremdpartikeln verhindert und darüber hinaus auch die Unterdruckhaltung verbessert. Eine derartige Dichtung kann auch an beiden Platten 1, 2 vorgesehen werden, wenn gewährleistet ist, daß die dünne Glasscheibe dadurch keinen Biegekräften unterworfen wird.

Figur 5 zeigt eine mögliche Abfolge von Arbeitsschritten bei der Bearbeitung von dünnem Glas, bei der die erfindungsgemäße Vorrichtung vorteilhaft einsetzbar ist. Die gesamte Einrichtung umfaßt insgesamt drei obere und zwei untere Platten (1a - 1c, 2a, 2b), die in Arbeitsrichtung hintereinander angeordnet sind und einen geraden horizontalen Arbeitsweg für die Glasscheibe 3 bzw. für davon abgetrennte Glasabschnitte 3' definieren. Im dargestellten Fall wird von einem aufgewickelten Rohglasballen 10 ausgegangen, dessen abgewickeltes Ende über eine Zuführeinrichtung 6 in eine Bearbeitungsstation transportiert ist. Die Zuführstation 6 umfaßt eine obere Platte 1a und eine untere Platte 2a, die beide mit paarweise gegenüberliegenden Gasdurchtrittsöffnungen ausgestattet sind und wie beschrieben, mit Über- oder Unterdruck beaufschlagt werden können. Die untere Platte 2a ist wesentlich länger ausgeführt als die obere Platte 1a, wobei im nach rechts überstehenden Teil entweder keine oder aber getrennt beaufschlagbare Gasdurchtrittsöffnungen vorgesehen sind. Die Platten 1a und 2a können ortsfest angeordnet sein, weil sie außer der berührungsfreien, schwebenden Lagehaltung beim Glastransport keine Funktion haben.

Die Platten 1b und 2b der Bearbeitungsstation 7 sind im wesentlichen gleich groß und in gleicher Weise mit Gasdurchtrittsöffnungen versehen, wobei geringfügige Abweichungen der flächigen Erstreckung, wie sie aus den Figuren 1 bis 4 ersichtlich sind, hier nicht dargestellt sind. Es sei jedoch erwähnt, daß zumindest die Platte 1b der Bearbeitungsstation 7 im allgemeinen etwas schmaler ist als das zu bearbeitende Glasband, damit eine beidseitige Randbeschneidung ohne weiteres möglich ist.

In Figur 5a ist die Glasscheibe 3 bzw. das Rohglasband durch nicht dargestellte, randseitig angreifende Transportmittel im "Schwebezustand" so weit von rechts nach links von dem Rohglasballen 10 abgezogen, daß eine vordere Schnittkante im Bereich des linken Endes der Bearbeitungsstation 7 liegt. Die Platte 1c befindet sich in ihrer Ruheposition oberhalb der Stapeleinrichtung 8 und den bereits fertigen Glasabschnitten 3'. In Figur 5b sind die oberen Platten 1a und 1b mit Überdruck und die unteren Platten 2a und 2b mit Unterdruck beaufschlagt. Dabei liegt die Glasscheibe 3 an den unteren Platten 2a, 2b an und ist damit in der Bearbeitungslage fixiert. Sie kann nunmehr mittels einer Schneideinrichtung 9 bearbeitet werden, d.h. es kann ein Glasabschnitt 3' vom Rohglasband abgetrennt werden. Es können alle geeigneten Schneidvorrichtungen zur Anwendung kommen. Wird die Glasscheibe dabei nicht gänzlich durchgetrennt, sondern nur geschwächt, genügt insbesondere bei dünnem Glas schon die Änderung der Druckbeaufschlagung in der Zuführeinrichtung 6 oder in der Bearbeitungsstation 7, um den verbleibenden Restquerschnitt zu brechen. Es können aber selbstverständlich auch bekannte Glasbrecheinrichtungen benutzt werden.

Auch an dieser Stelle sei erwähnt, daß das Rohglasband an den Längskanten der Bearbeitungsstation 7 übersteht und in ähnlicher Weise bearbeitet werden kann. Selbstverständlich sind hier und an den quer zur Bandrichtung verlaufenden Schneidkanten auch gegebenenfalls erforderliche Kanten- und Eckenbearbeitungen durch Schleifen ausführbar.

In Figur 5c ist gezeigt, wie der Glasabschnitt 3' mittels der horizontal beweglichen Platte 2b in eine Position gegenüber der oberen Platte 1c gebracht und von dieser angesaugt wurde. Nach dem Rückfahren der Platte 2b in ihre Ausgangsposition kann die Platte 1c gemäß Figur 5b zur Ablage des Glasabschnitts 3' auf der Stapeleinrichtung 8 vertikal nach unten verfahren werden. Gleichzeitig kann das Rohglasband in der Zuführeinrichtung 6 in die Schwebeposition angehoben und danach berührungsfrei in die Bearbeitunsstation 7 transportiert werden. Auf diese Weise ist eine rationelle Taktfolge realisierbar.

Die in Figur 5 dargestellten Arbeitsschritte können selbstverständlich auch mit mehr und anders beweglichen Platten durchgeführt werden. Insbesondere kann eine Ablagebewegung quer zur Transporteinrichtung des Rohglasbandes vorgesehen werden. Es können auch zwei oder mehr Bearbeitungsstationen eingerichtet werden, wenn mehrere getrennte Arbeitsschritte durchzuführen sind und so eine rationellere Auslastung der einzelnen Stationen erreicht werden kann.

Der Erfindungsgedanke kann in vorteilhafter Weise auch angewendet werden, wenn dünnes Glas in einzelnen Abschnitten oder als Band über eine längere Strecke transportiert werden muß. Mit einer Mehrzahl von in Förderrichtung nach Fig. 1 beabstandet zueinander angeordneten Plattenpaaren, die alle beidseitig mit Überdruck beaufschlagt sind, kann ein berührungsfreier Transport realisiert werden, wobei selbstverständlich randseitig angreifende Förderbänder oder dergleichen vorgesehen werden müssen.

Schließlich ist es auch möglich, das im Überdruckbetrieb zugeführte Gas und/oder die Glasscheiben so aufzuheizen, daß die dünnen Glasscheiben zwischen den Platten einer Wärmebehandlung (Temperung) unterzogen werden.

In allen Fällen können die erfindungsgemäßen Vorteile genutzt werden: wahlweise berührungsfreie und biegefreie Führung und Halterung, Festhalten der Glasscheibe an einer Platte und Reinhaltung der Glasoberflächen durch permanenten Gasstrom bzw. dichtes Anliegen an einer Platte während der gesamten Handhabung.

## Patentansprüche

1. Verfahren zur Handhabung dünner Glasscheiben oder ähnlicher flächiger Werkstücke und Produkte mittels pneumatischer Kräfte sowie unter Verwendung einer Vorrichtung, bei der wenigstens zwei Platten (1, 2) mit zumindest einseitig ebenen Oberflächen parallel und beabstandet zueinander angeordnet und mit einer Vielzahl von im wesentlichen senkrecht in die Oberfläche mündenden Gaskanälen ausgestattet sind und wobei alle Gaskanäle einer Platte über Rohre oder dergleichen mit einer Gasfördereinrichtung zur Erzeugung von Überdruck oder Unterdruck verbunden sind, wobei die Gaskanäle beider Platten entweder mit Überdruck beaufschlagt werden, um die dünnen Glasscheiben zwischen den beiden Platten berührungslos zu transportieren oder die Gaskanäle nur einer Platte mit Unterdruck beaufschlagt werden, um die dünnen Glasscheiben an der Platte festzuhalten und zu bearbeiten oder zusammen mit der Platte zu transportieren.

2. Verfahren nach Anspruch 1 unter Verwendung von Platten, bei denen wenigstens ein Teil der Austrittsöffnungen der Gaskanäle paarweise einander gegenüberliegend angeordnet ist und wobei die pneumatischen Kräfte bei Überdruckbetrieb von beiden Seiten örtlich gleichmäßig auf die dünnen Glasscheiben aufgebracht werden.

3. Verfahren nach Anspruch 1 oder 2, **dadurch gekennzeichnet, dass** zum berührungslosen Transport der dünnen Glasscheiben zwischen den Platten eine gesonderte Transporteinrichtung verwendet wird.

4. Verfahren nach Anspruch 3, **dadurch gekennzeichnet, dass** randseitig über Reibschluss an den Glasscheiben angreifende Förderbänder verwendet werden.

5. Verfahren nach einem der Ansprüche 1 bis 4, **dadurch gekennzeichnet, dass** das bei Überdruckbetrieb zugeführte Gas und/oder die Glasscheiben aufgeheizt werden und dass die Glasscheiben zwischen den Platten einer Wärmebehandlung unterzogen werden.

6. Verfahren nach Anspruch 5, **dadurch gekennzeichnet, dass** die Wärmebehandlung kontinuierlich während des Transportes oder chargenweise bei nicht aktivierter Transporteinrichtung erfolgt.

7. Vorrichtung zur Durchführung des Verfahrens nach einem der Ansprüche 1 bis 6, mit den in diesen Ansprüchen definierten entsprechenden Vorrichtung merkmalen, **dadurch gekennzeichnet**, das der Abstand (D) der Platten (1, 2) auf die Dicke (d) der zu handhabenden Glasscheibe (3) einstellbar ist.

8. Vorrichtung nach Anspruch 7, **dadurch gekennzeichnet, dass** die Platten (1, 2) im wesentlichen horizontal angeordnet sind und dass wenigstens eine der Platten (1, 2) vertikal bewegbar ist.

9. Vorrichtung nach Anspruch 8, **dadurch gekennzeichnet, dass** wenigstens eine der Platten (1, 2) horizontal bewegbar ist.

10. Vorrichtung nach einem der Ansprüche 7 bis 9, **dadurch gekennzeichnet, dass** die paarweise einander gegenüberliegenden Gasdurchtrittsöffnungen (4) jeweils im wesentlichen den gleichen Durchtrittsquerschnitt und den gleichen Strömungswiderstand aufweisen.

11. Vorrichtung nach einem der Ansprüche 7 bis 10, **dadurch gekennzeichnet, dass** die einander gegenüberliegenden Oberflächen der Platten (1, 2) im wesentlichen die gleiche Rauhigkeit, vorzugsweise <10µm aufweisen und paarweise identische Obenflächenprofile oder Texturen aufweisen.

12. Vorrichtung nach einem der Ansprüche 7 bis 11, dadurch gekennzeichent, dass wenigstens eine der Platten (1, 2) eine randseitig umlaufende Dichtung (5) aufweist, die bei Unterdruckbetrieb das Eindringen von Fremdkörpern zwischen Platten (1, 2) und Glasscheibe (3) verhindert.

13. Vorrichtung nach einem der Ansprüche 7 bis 12, **dadurch gekennzeichnet, dass** Mittel vorgesehen sind, um die Höhe des angelegten Über- oder Unterdrucks zu steuern und um Teilbereiche der wirksamen Flächen der Platten (1, 2) unabhängig voneinander mit Über- oder Unterdruck zu beaufschlagen.

14. Vorrichtung nach einem der Ansprüche 7 bis 13, **dadurch gekennzeichnet, dass** Mittel vorgesehen sind, um die mittels beidseitigem Überdruck berührungsfrei zwischen den Platten (1, 2) gehaltene Glasscheibe (3) in horizontaler Richtung bewegen und arretieren zu können.

15. Vorrichtung nach einem der Ansprüche 7 bis 14, **dadurch gekennzeichnet, dass** die wirksame Fläche einer der Platten (1, 2) kleiner ist als die Fläche der zu handhabenden Glasscheibe (3) und dass Mittel vorgesehen sind, um die Glasscheibe (3) außerhalb der wirksamen Fläche der Platten (1, 2) zu bearbeiten.

16. Vorrichtung nach einem der Ansprüche 7 bis 15, **dadurch gekennzeichnet, dass** die wirksame Fläche einer der Platten (1, 2) gleich oder größer ist als die Fläche der zu handhabenden Glasscheibe (3), dass die Platte (1, 2) Ausnehmungen aufweist und dass Mittel vorgesehen sind, um die Glasscheibe (3) längs der Ausnehmungen in der Platte (1, 2) zu bearbeiten.

17. Vorrichtung nach einem der Ansprüche 7 bis 15, **dadurch gekennzeichnet, dass** eine der Platten (1, 2) aus zwei oder mehreren Teilbereichen zusammengesetzt ist, die mit durchgehenden Zwischenräumen zueinander beabstandet sind, und dass Mittel vorgesehen sind, um die Glasscheibe (3) zwischen den Teilbereichen längs der durchgehenden Zwischenräume zu bearbeiten.

18. Vorrichtung zur Handhabung von dünnen Glasscheiben (3) nach einem der Ansprüche 7 bis 17, **gekennzeichnet durch** ein erstes horizontal angeordnetes Plattenpaar (1a, 2a), das eine Zuführeinrichtung (6) für die Glasscheibe (3) bildet, sowie **durch** ein zweites Plattenpaar (1 b, 2b), das eine Bearbeitungsstation (7) für die Glasscheibe (3) bildet, wobei wenigstens eine der Platten (1 b, 2b) vertikal und/oder horizontal bewegbar ist.

19. Verrichtung nach Anspruch 18, **dadurch gekennzeichnet, dass** eine weitere, vorzugsweise obere Platte (1 c) vorgesehen ist, um den fertig bearbeiteten Glasabschnitt (3') aus der Bearbeitungsstation (7) wegzuführen.

20. Vorrichtung nach Anspruch 19, **dadurch gekennzeichnet, dass** die weitere Platte (1c) horizontal und/oder vertikal beweglich ausgebildet ist.

21. Vorrichtung nach Anspruch 20, **dadurch gekennzeichnet, dass** der Bearbeitungsstation (7) eine obere Platte (1c) und eine Stapeleinrichtung (8) nachgeordnet sind.

22. Vorrichtung nach Anspruch 21, **dadurch gekennzeichnet, dass** die Stapeleinrichtung (8) vertikal bewegbar ausgebildet ist, so dass die Ablageebene an dem abzulegenden Glasabschnitt (3') heranführbar ist, ohne dass die obere Platte (1c) vertikal bewegt werden muss.

23. Vorrichtung zur Durchführung des Verfahrens nach Ansprüche 7, **gekennzeichnet durch** randseitig angreifende Förderbänder oder dergleichen, dergestalt dass in Förderrichtung eine Mehrzahl von Plattenpaaren (1, 2) angeordnet ist, dass alle Plattenpaare (1, 2) beidseitig mit Überdruck beaufschlagt sind und dass in Förderrichtung zwischen den Plattenpaaren (1, 2) Abstände zur Gasabfuhr vorgesehen sind.

24. Vorrichtung nach einem der Ansprüche 7 bis 23, **gekennzeichnet durch** Mittel zum Aufheizen des im Überdruckbetrieb zugeführten Gases und/oder der Glasscheiben zur Durchführung einer Wärmebehandlung (Temperung) der Glasscheiben (3) zwischen den Platten (1, 2).

## Claims

1. Method for handling thin panes of glass or similar sheet-like workpieces and products by means of pneumatic forces and using a device in which at least two plates (1, 2) with surfaces which are planar on at least one side are arranged parallel to and at a distance from one another and are equipped with a multiplicity of gas passages which open out substantially perpendicularly into the surface, all the gas passages of one plate being connected via tubes or the like to a gas-delivery means for generating excess pressure or reduced pressure, either the gas passages of both plates being acted on by excess pressure, in order for the thin panes of glass to be transported without contact between the two plates, or the gas passages of just one plate being acted on by reduced pressure, in order to hold the thin panes of glass in place on the plate and process them there or to transport them together with the plate.

2. Method according to Claim 1 using plates in which at least some of the outlet openings of the gas passages are arranged in pairs lying opposite one another, the pneumatic forces during excess-pressure operation being applied to the thin panes of glass locally uniformly from both sides.

3. Method according to Claim 1 or 2, **characterized in that** a separate transport means is used for transporting the thin panes of glass between the plates without contact.

4. Method according to Claim 3, **characterized in that** conveyor belts which act on the panes of glass at the edges via a frictional lock are used.

5. Method according to one of Claims 1 to 4, **characterized in that** the gas which is supplied in excess-pressure mode and/or the panes of glass are heated, and **in that** the panes of glass are subjected to a heat treatment between the plates.

6. Method according to Claim 5, **characterized in that** the heat treatment takes place continuously during transport or in batches when the transport means is not activated.

7. Device for carrying out the method according to one of Claims 1 to 6, having the corresponding device features defined in these claims, **characterized in that** the distance (D) between the plates (1, 2) can be adjusted to the thickness (d) of the pane of glass (3) which is to be handled.

8. Device according to Claim 7, **characterized in that** the plates (1, 2) are arranged substantially horizontally, and **in that** at least one of the plates (1, 2) can move in the vertical direction.

9. Device according to Claim 8, **characterized in that** at least one of the plates (1, 2) can move in the horizontal direction.

10. Device according to one of Claims 7 to 9, **characterized in that** the gas passage openings (4) which lie opposite one another in pairs in each case have substantially the same passage cross section and the same flow resistance.

11. Device according to one of Claims 7 to 10, **characterized in that** the surfaces, which lie opposite one another, of the plates (1, 2) have substantially the same roughness, preferably <10 µm, and in pairs have identical surface profiles or textures.

12. Device according to one of Claims 7 to 11, **characterized in that** at least one of the plates (1, 2) has an encircling seal (5) at the edge side, which during reduced-pressure operation prevents foreign bodies from penetrating between plates (1, 2) and pane of glass (3).

13. Device according to one of Claims 7 to 12, **characterized in that** there are means for controlling the level of excess pressure or reduced pressure applied and for applying excess pressure or reduced pressure to partial regions of the active surfaces of the plates (1, 2) independently of one another.

14. Device according to one of Claims 7 to 13, **characterized in that** there are means which allow the pane of glass (3), which is held without contact between the plates (1, 2) by means of excess pressure on both sides, to be moved in the horizontal direction and held in place.

15. Device according to one of Claims 7 to 14, **characterized in that** the active surface area of one of the plates (1, 2) is smaller than the surface area of the pane of glass (3) which is to be handled, and **in that** there are means for processing the pane of glass (3) outside the active surface area of the plates (1, 2).

16. Device according to one of Claims 7 to 15, **characterized in that** the active surface area of one of the plates (1, 2) is larger than or the same size as the surface area of the pane of glass (3) which is to be handled, **in that** the plate (1, 2) has recesses and **in that** there are means for processing the pane of glass (3) along the recesses in the plate (1, 2).

17. Device according to one of Claims 7 to 15, **characterized in that** one of the plates (1, 2) is composed of two or more partial regions which are spaced apart from one another with continuous spaces between them, and that there are means for processing the pane of glass (3) between the partial regions along the continuous spaces.

18. Device for handling thin panes of glass (3) according to one of Claims 7 to 17, **characterized by** a first, horizontally arranged pair of plates (1a, 2a), which forms a feed means (6) for the pane of glass (3), and by a second pair of plates (1b, 2b) , which forms a processing station (7) for the pane of glass (3), it being possible for at least one of the plates (1b, 2b) to move vertically and/or horizontally.

19. Device according to Claim 18, **characterized in that** a further, preferably upper plate (1c) is provided for removing the fully processed glass section (3') out of the processing station (7).

20. Device according to Claim 19, **characterized in that** the further plate (1c) is designed such that it can move horizontally and/or vertically.

21. Device according to Claim 20, **characterized in that** an upper plate (1c) and a stacking means (8) are arranged downstream of the processing station (7).

22. Device according to Claim 21, **characterized in that** the stacking means (8) is designed so that it can move vertically, such that the put-down plane can be moved to the glass section (3') which is to be put down without the upper plate (1c) having to move vertically.

23. Device for carrying out the method according to Claim 7, **characterized by** conveyor belts or the like which act on the edge sides in such a manner that a plurality of pairs of plates (1, 2) are arranged in the conveying direction, that excess pressure is applied to all the pairs of plates (1, 2) on both sides and that spacings for discharging gas are provided between the pairs of plates (1, 2) in the conveying direction.

24. Device according to one of Claims 7 to 23, **characterized by** means for heating the gas which is supplied in excess-pressure mode and/or the panes of glass in order to carry out a heat treatment (annealing) of the panes of glass (3) between the plates (1, 2).

## Revendications

1. Procédé pour la manipulation de vitres minces ou de pièces à usiner et produits plats similaires au moyen de forces pneumatiques et avec l'utilisation d'un dispositif, sur lequel au moins deux plaques (1, 2) sont disposées de façon parallèle et espacées l'une de l'autre avec des surfaces planes au moins sur un côté et sont équipées d'une pluralité de canaux de gaz débouchant de façon sensiblement perpendiculaire dans la surface et tous les canaux de gaz d'une plaque étant reliés au moyen de tuyaux ou similaires à un dispositif de transport de gaz pour la génération de surpression ou de dépression, les canaux de gaz des deux plaques étant alimentés avec de la surpression afin de transporter sans contact les vitres minces entre les deux plaques ou bien les canaux de gaz d'une seule plaque étant alimentés avec de la dépression afin de maintenir et de travailler les vitres minces sur la plaque ou de les transporter conjointement avec la plaque.

2. Procédé selon la revendication 1 avec l'utilisation de plaques, sur lesquelles au moins une partie des orifices de sortie des canaux de gaz sont disposés en se faisant face par paires et les forces pneumatiques étant appliquées en mode surpression à partir des deux côtés, localement et de façon uniforme, sur les vitres minces.

3. Procédé selon la revendication 1 ou 2, **caractérisé en ce qu'**un dispositif de transport séparé est utilisé pour le transport sans contact des vitres minces entre les plaques.

4. Procédé selon la revendication 3, **caractérisé en ce que** des bandes transporteuses s'appliquant côté bord par frottement sur les vitres sont utilisées.

5. Procédé selon l'une quelconque des revendications 1 à 4, **caractérisé en ce que** le gaz amené en mode surpression et/ou les vitres sont réchauffés et **en ce que** les vitres sont soumises à un traitement thermique entre les plaques.

6. Procédé selon la revendication 5, **caractérisé en ce que** le traitement thermique s'effectue de façon continue pendant le transport ou par charge avec le dispositif de transport non activé.

7. Dispositif pour l'application du procédé selon l'une quelconque des revendications 1 à 6, avec les caractéristiques du dispositif correspondantes et définies dans ces revendications, **caractérisé en ce que** l'espacement (D) des plaques (1, 2) peut être réglé sur l'épaisseur (d) de la vitre (3) à manipuler.

8. Dispositif selon la revendication 7, **caractérisé en ce que** les plaques (1, 2) sont disposées de façon sensiblement horizontale et **en ce qu'**au moins l'une des plaques (1, 2) est déplaçable dans le sens vertical.

9. Dispositif selon la revendication 8, **caractérisé en ce qu'**au moins une des plaques (1, 2) est déplaçable dans le sens horizontal.

10. Dispositif selon l'une quelconque des revendications 7 à 9, **caractérisé en ce que** les orifices de passage de gaz (4) se faisant face par paires présentent respectivement sensiblement la même section de passage et la même résistance à l'écoulement.

11. Dispositif selon l'une quelconque des revendications 7 à 10, **caractérisé en ce que** les surfaces se faisant face des plaques (1, 2) présentent sensiblement la même rugosité, de préférence inférieure à 10 µm et présentent des profilés de surface ou des textures identiques par paires.

12. Dispositif selon l'une quelconque des revendications 7 à 11, **caractérisé en ce qu'**au moins l'une des plaques (1, 2) présente un joint (5) périphérique côté bord, qui empêche en mode dépression la pénétration de corps étrangers entre les plaques (1, 2) et la vitre (3).

13. Dispositif selon l'une quelconque des revendications 7 à 12, **caractérisé en ce qu'**il est prévu des moyens pour contrôler le niveau de la surpression ou de la dépression appliquée et pour alimenter des zones partielles des surfaces efficaces des plaques (1,2) indépendamment les unes des autres avec de la surpression ou de la dépression.

14. Dispositif selon l'une quelconque des revendications 7 à 13, **caractérisé en ce qu'**il est prévu des moyens pour pouvoir déplacer et arrêter dans le sens horizontal la vitre (3) maintenue entre les plaques (1, 2) sans contact au moyen de la surpression des deux côtés.

15. Dispositif selon l'une quelconque des revendications 7 à 14, **caractérisé en ce que** la surface efficace de l'une des plaques (1, 2) est inférieure à la surface de la vitre (3) à manipuler et **en ce qu'**il est prévu des moyens pour travailler la vitre (3) à l'extérieur de la surface efficace des plaques (1, 2).

16. Dispositif selon l'une quelconque des revendications 7 à 15, **caractérisé en ce que** la surface efficace de l'une des plaques (1, 2) est identique ou supérieure à la surface de la vitre (3) à manipuler, **en ce que** la plaque (1, 2) présente des évidements et **en ce qu'**il est prévu des moyens pour travailler la vitre (3) le long des évidements dans la plaque (1, 2).

17. Dispositif selon l'une quelconques des revendications 7 à 15, **caractérisé en ce que** l'une des plaque (1, 2) est composée de deux ou plusieurs zones partielles qui sont espacées les unes des autres avec des interstices continus et **en ce qu'**il est prévu des moyens pour travailler la vitre (3) entre les zones partielles le long des interstices continus.

18. Dispositif pour la manipulation de vitres (3) minces selon l'une quelconque des revendications 7 à 17, **caractérisé par** une première paire de plaques (la, 2a) disposée horizontalement, qui forme un dispositif d'amenée (6) pour la vitre (3), et par une seconde paire de plaques (1b, 2b) qui forme un poste de travail (7) pour la vitre (3), au moins l'une des plaques (1b, 2b) pouvant être déplacée verticalement et/ou horizontalement.

19. Dispositif selon la revendication 18, **caractérisé en ce qu'**il est prévu une autre plaque (1c) de préférence supérieure, pour guider et enlever la partie de verre (3') façonnée du poste de travail (7).

20. Dispositif selon la revendication 19, **caractérisé en ce que** l'autre plaque (1c) est conçue de façon mobile dans le sens horizontal et/ou vertical.

21. Dispositif selon la revendication 20, **caractérisé en ce qu'**une plaque (1c) supérieure et un dispositif d'empilage (8) sont disposés en aval du poste de travail (7).

22. Dispositif selon la revendication 21, **caractérisé en ce que** le dispositif d'empilage (8) est conçu de façon mobile dans le sens vertical, de sorte que le plan de dépôt peut être rapproché de la partie de verre (3') à déposer sans que la plaque (1c) supérieure doive être déplacée verticalement.

23. Dispositif pour l'application du procédé selon la revendication 7, **caractérisé par** des bandes transporteuses ou similaires s'appliquant côté bord, de telle sorte qu'une pluralité de paires de plaques (1, 2) est disposée dans le sens de transport, que toutes les paires de plaques (1, 2) sont alimentées en surpression des deux côtés et que des espacements par rapport à l'arrivée de gaz sont prévus dans le sens de transport entre les paires de plaques (1, 2).

24. Dispositif selon l'une quelconque des revendications 7 à 23, **caractérisé par** les moyens pour le réchauffement du gaz amené en mode surpression et/ou des vitres pour la réalisation d'un traitement thermique (attrempage) des vitres (3) entre les plaques (1, 2).
